# Europäisches Patentamt

## European Patent Office

(11) Veröffentlichungsnummer: **0 115 793**
**B1**

## Office européen des brevets

(12) # EUROPÄISCHE PATENTSCHRIFT

(45) Veröffentlichungstag der Patentschrift:
13.08.86

(51) Int. Cl.⁴: **C 25 F 5/00, C 25 F 7/00**

(21) Anmeldenummer: **84100355.1**

(22) Anmeldetag: **14.01.84**

(54) **Verfahren und Vorrichtung zum Behandeln von Natrium-Nitrat haltigen Elektrolyten beim elektrochemischen Abtragen.**

(30) Priorität: **03.02.83 DE 3303585**

(43) Veröffentlichungstag der Anmeldung:
**15.08.84 Patentblatt 84/33**

(45) Bekanntmachung des Hinweises auf die Patenterteilung:
**13.08.86 Patentblatt 86/33**

(84) Benannte Vertragsstaaten:
**CH DE FR GB IT LI SE**

(56) Entgegenhaltungen:
GB-A-1 573 873

PATENT ABSTRACTS OF JAPAN, unexamined
applications, C Field, Vol. 6, No. 169, 2. September
1982 THE PATENT OFFICE JAPANESE
GOVERNMENT Seite 148 C 122
PATENT ABSTRACTS OF JAPAN, unexamined
application, C Field, Vol. 4, No. 124, 2. September
1980 THE PATENT OFFICE JAPANESE
GOVERNMENT Seite 144 C 23

(73) Patentinhaber: **AUDI AG, Postfach 220, D-8070
Ingolstadt (DE)**

(72) Erfinder: **Lindner, Horst, Silesiusstrasse 1, D-8070
Ingolstadt (DE)**
Erfinder: **Ufer, Peter, Peisserstrasse 42, D-8070
Ingolstadt (DE)**
Erfinder: **Heck, Klaus, Krummenauerstrasse 4,
D-8070 Ingolstadt (DE)**
Erfinder: **Schmöger, Gerhard, Dr., Fasanenweg 7a,
D-8070 Ingolstadt (DE)**

(74) Vertreter: **Le Vrang, Klaus, AUDI AG Postfach 220
Patentabteilung, D-8070 Ingolstadt (DE)**

## Beschreibung

Die Erfindung betrifft ein Verfahren zum Behandeln von Natrium-Nitrat-haltigen Elektrolyten beim elektrochemischen Abtragen der Oberflächen von eisenhaltigen Werkstücken gemäß dem Oberbegriff des Patentanspruches 1. Ferner betrifft die Erfindung eine Vorrichtung zur Durchführung des Verfahrens.

Bei elektrochemischen Abtragsverfahren, z. B. beim elektrochemischen Metallabtragen (ECM) oder beim elektrochemischen Honen von Zylinderlaufflächen von Brennkraftmaschinen, werden in der Regel Natriumnitrat-Lösungen ($NaNO_3$) als Elektrolyt verwendet. Bei der anodischen Metallauflösung wird das Nitrat nach nachstehender Formal zu Nitrit reduziert:

$$NO_3^{(-)} + 2[H] \rightarrow NO_2^{(-)} + H_2O$$

Der dadurch im Elektrolyt steigende Nitritgehalt bildet auf der abzutragendan Oberfläche des Werkstückes Passivschichten, welche den Wirkungsgrad der elektrochemischen Abtragung mehr oder weniger herabsetzen. Dementsprechend nimmt der Oberflächenabtrag bei gleicher Stromdichte undefiniert ab.

Ein gewisser Ausgleich kann durch Erhöhen der Stromdichte bzw. des spezifischen Energieeinsatzes erreicht werden, wobei allerdings als weiterer Nachteil mit einer starken Erwärmung des Elektrolyten und ggf. mit entsprechenden Kühleinrichtungen zu rechnen ist. Darüber hinaus tritt eine verstärkte anodische Sauerstoff- und kathodische Wasserstoffentwicklung auf, welche ebenfalls hinsichtlich des Abtragungswirkungsgrades nachteilig ist.

Um die Sauerstoff- und Wasserstoffentwicklung zu unterdrücken, wird z. B. beim ECM-Verfahren das elektrochemische Abtragen in einem Druckbehälter durchgeführt; zudem wird mit erhöhter Elektrolytgeschwindigkeit gearbeitet, was entsprechende Elektrolytdrücke und Pumpenleistungen erfordert und zu einer erhöhten Abrasion an den Kohle-Elektroden führt.

Der von der Werkstückoberfläche abgetragene, aus dem Elektrolyten separierte Metallschlamm ist bezüglich seines Nitritgehaltes zu entgiften, damit der Schlamm einer Deponie zugeführt werden kann. Der Schlamm karnn im Oxidationsverfahren aurch Zusetzen von Natriumhypochlorid oder Wasserstoffperoxid aufoxidiert werden. Der pH-Wert muß hierbei zwischen 3 und 4 liegen. Bei einem alternativen Reduktionsverfahren im schwach sauren Bereich wird das Nitrit mit Amidosulfonsäure oder Harnstoff bis zum Stickstoff reduziert. Es entsteht dabei Schwefelsäure bzw. Kohlensäure.

Bei beiden Verfahren muß zur besseren Ausflockung des Eisenhydroxidschlammes ein Flockungsmittel zugeserzt werden. Beide Verfahren bedürfen somit zur Nitritentgiftung eines umfangreichen apparativen Aufwandes und somit hoher Investitionsmittel; außerdem entstehen laufend erhebliche Kosten an Chemikalien.

Aufgabe der Erfindung ist es, ein gattungsgemäßes Verfahren zu schaffen, mit dem ein im Wirkungsgrad und in der Steuerung verbessertes elektrochemisches Abtragen ermöglicht und ein wirtschaftliches Beseitigen des Metallschlammes erzielbar ist. Weiter soll eine besonders wirksame und kostenmäßig günstige Vorrichtung zur Durchführung des Verfahrens aufgezeigt werden. Die verfahrensgemäße Aufgabe wird erfindungsgemäß mit den kennzeichnenden Merkmalen des Patentanspruches 1 gelöst. Wie sich überraschend herausgestellt hat, kann durch das ständige Zusetzen eines Oxidationsmittels, gemäß Patentanspruch 2 vorzugsweise von Ozon ($O_3$), eine Oxidation des Nitrits zu Nitrat im basischen Bereich durchgeführt werden. Dadurch wird während des elektrochemischen Abtrages die Passivschichtbildung auf der Oberfläche des zu bearbeitenden Werkstückps unterdrückt und somit der Abtragswirkungsgrad verbessert. Daraus resultieren eine höhere Abtragsleistung und kürzere Bearbeitungszeiten.

Ferner wird durch die ständige Zugabe des Oxidationsmittels kolloidal gelöstes Eisen-II-Hydroxid zu ausfällbarem Eisen-III- Hydroxid (Metallschlamm) oxidiert. Dies bewirkt ein besseres Ausflocken des Schlammes bei einer höheren Sinkgeschwindigkeit, wodurch die Entsorgung der gesamten Anlage mit verringertem Aufwand verbunden ist. Auf die Zugabe von Flockungsmitteln kann demgemäß verzichtet werden.

Schließlich tritt aufgrund des niedrigen Nitritgehaltes im Elektrolyten und der daraus resultierenden, geringeren Passivschichtbildung am Werkstück eine geringere Gasbildung ($O_2 + H_2$) auf. Hierdurch ist es möglich, mit geringen Elektrolytströmungsgeschwindigkeiten zu arbeiten, was bei Verwendung von Kohleelektroden zu einer geringeren Abrasion und somit zu längeren Elektrodenstandzeiten führt.

Das Oxidationsmittel kann gemäß dem Merkmal des Patentanspruches 3 zugeführt werden, wobei sich bei einer hohen Abtragsleistung eine Zufuhr im Hauptstrom des Elektrolyten als vorteilhaft erwies.

Bei einer Behandlung des Elektrolyten entsprechend dem Patentanspruch 4 kann der Metallschlamm unter Berücksichtigung geltender gesetzlicher Auflagen ohne einer besonderen Entgiftung der Deponie zugeführt werden.

Eine die Aufgabe der Erfindung lösende Vorrichtung zur Durchführung des Verfahrens ist den Merkmalen des Patentanspruches 5 entnehmbar. Die ständige Oxidierung des Nitrites zu Nitrat im Elektrolyten kann somit mit einer in den Elektrolytkreislauf eingeschalteten Behandlungsstation mit einem Ozonerzeuger und einem Reaktor erfolgen. Im Reaktor wird dabei das Ozon in den Elektrolyten eingetragen bzw. die Oxidierung bewirkt. Eine derartige Behandlungsstation kann beispielsweise auch an bereits in Betrieb befindlichen Anlagen nachgerüstet werden.

Durch die Merkmale des Anspruches 6 wird sine Gasbildung des Metallschlammes insbesondere im Reaktor vermieden, wodurch ein schnelles Absetzen des Metallschlammes gefördert wird.

Mit den Merkmalen der Ansprüche 7 und 8 wird ferner eine noch gesteigerte, intensive Reaktion des Oxidierungsmittels bzw. Ozon mit dem im Elektrolyten angelagerten Nitrit erzielt.

Weitere Einzelheiten der Erfindung sind der nachfolgenden Beschreibung eines Ausführungsbeispieles entnehmbar. Die Zeichnung zeigt in

Fig. 1 ein Blockschaltbild eines erfindungsgemäßen Verfahrens und

Fig. 2 eine erfindungsgemäße Behandlungsstation in schematischer Darstellung.

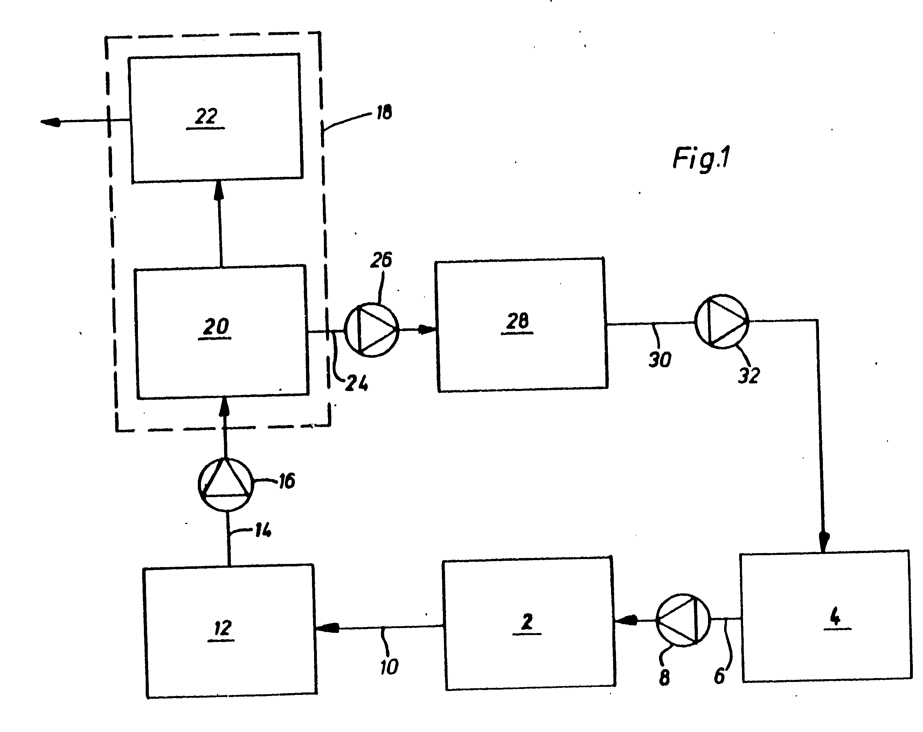

In Fig. 1 ist mit 2 eine elektrochemische Bearbeitungsstation angedeutet, in welcher Zylinderlaufflächen einer Hubkolben-Brennkraftmaschine bearbeitet werden. Dabei ist in nicht dargestellter Weise der aus Grauguß hergestellte Zylinderblock an das Pluspotential einer Stromquelle und eine zylinderförmige Elektrode an das Minuspotential dieser Stromquelle angeschlossen. Der beim elektrochemischen Abtrag zugeführte Elektrolyt setzt sich aus einer 25-prozentigen NaNO₃-Lösung zusammen. Einzelheiten des elektrochemischen Honene und des dafür verwendeten Werkzeugs sind beispielsweise der Dissertation "Untersuchung des elektrochemischen Honens" von Egbert Scholz an der Technischeh Hochschule Aachen vom 22. Juni 1968 entnehmbar.

Der Elektrolyt wird der Bearbeitungsstation 2 aus einem Vorratsbehälter 4 über eine Leitung 6 und eine Pumpe 8 zugeführt. Die elektrochemische Bearbeitung ist an sich bekannt und deshalb hier nicht näher erläutert. Die Elektrode wird in das Werkstück eingefahren, der Elektrolytkreislauf wird in Tätigkeit gesetzt und die Stromzufuhr eingeschaltet. Bei der anodischen Metallauflösung wird das Nitrat nach nachstehender Formel zu Nitrit reduziert:

$$NO_3^{(-)} + 2[H] \rightarrow NO_2^{(-)} + H_2O$$

Der die Bearbeitungsstation 2 durchlaufene mit Abtragmaterial bzw. Metallschlamm aus Eisen-III-Hydroxid vermengte Elektrolyt strömt über eine Leitung 10, einen Zwischenbehälter 12, eine Leitung 14 mit einer weiteren Pumpe 16 zu einer Schlammabscheideeinrichtung 18.

Die Schlammabscheideeinrichtung 18 setzt sich aus einem Schrägklärer 20 und einer Schlammentwässerungsvorrichtung 22 zusammen Aus der Schlammentwässerungsvorrichtung wird der Metallschlamm als ein stichfester, deponiefähiger Dickschlamm ausgeschieden.

Vom Schrägklärer 20 wird der vom Metallschlamm separierte Elektrolyt über eine Leitung 24 und eine dritte Pumpe 26 einer das Oxidationsmittel bzw. das Ozon einbringenden Behandlungsstation 28 zugeführt. Nach der noch zu beschreibenden Oxidation des Elektrolyten wird dieser über eine Leitung 30 und eine weitere Pumpe 32 in den Vorratsbehälter 4 zurückgefördert.

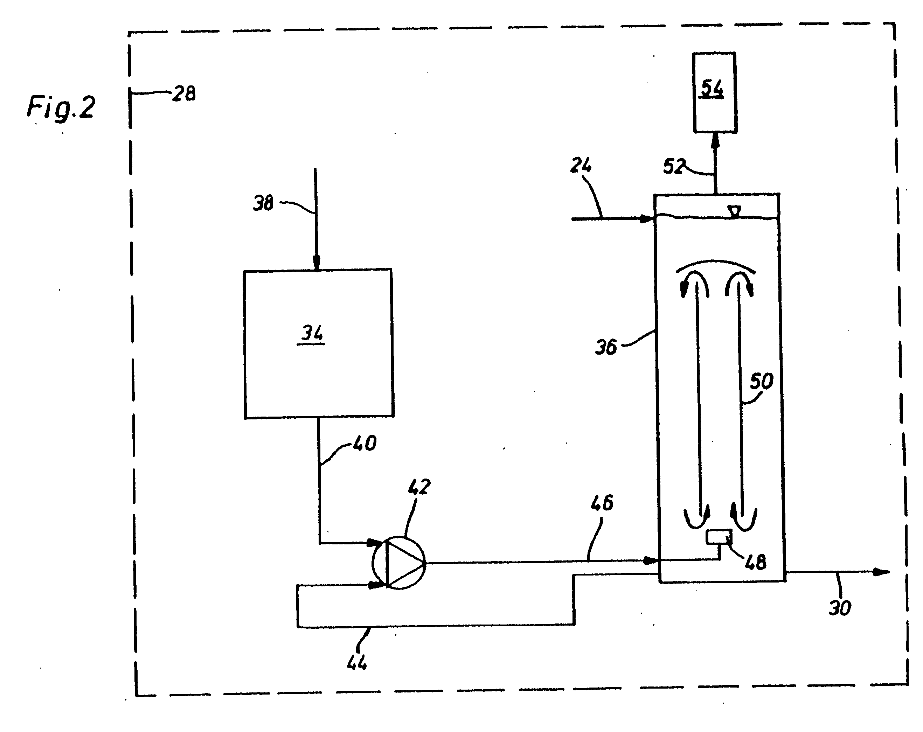

Die Fig. 2 zeigt die Behandlungsstation 28, welche sich im wesentlichen aus einem Ozonerzeuger 34 einem Reaktor 36 zusammensetzt. Dem Ozonerzeuger wird über eine Leitung 38 Luft zugeführt, von weicher über Hochspannungsentladung Ozon erzeugt wird. Der Ozon wird über eine Leitung 40 einer Pumpe 42 zugeführt, in deren Saugspite auch eine weitere Leitung 44 einmündet, welche dit dem Reaktor 36 verbunden ist. In der Pumpe 42 wird sodt Ozon und im Reaktor 36 befindliches Elektrolyt angesaugt und über eine Mischleitung 46 einem brauseartigen Einlaß 48 innerhalb des Reaktors 36 zugeführt.

Der Einlaß 48 bildet mit einem konzentrischen Innenrohr 50 im Reaktor 36 eine Mammutpumpe, mittels der der im Reaktor 36 befindliche Elektrolyt im Gegenstromprinzip intensiv verwirbelt und mit Ozon vermischt wird, wobei eine Oxidation des im Elektrolyten befindlichen Nitrites mit Ozon zu Nitrat erfolgt. Die Elektrolytzufuhr in den Reaktor erfolgt über die Leitung 24, während oxidiertes Elektrolyt über die Leitung 30 in den Vorratsbehälter 4 abgeführt wird. Der im Reaktor 36 abdampfende Ozon wird an der geodätisch am höchsten liegenden Stelle über eine Leitung 52 einem Aktivkohlebehälter 54 zugeführt und in diesem zu $O_2$ aufgespalten.

Durch die ständige Oxidation des Elektrolyten in der Behandlungsstation 28 wird der mittlere Nitritgehalt im Elektrolyten derart niedrig gehalten, daß eine schnelle und vorzeitige Passivierung der Werkstückoberfläche während des elektrochemischen Abtragens vermieden und der Nitritgehalt im ausgeschiedenen Dickschlammn unter der gesetzlich vorgeschriebenen Menge von 20 dg/l liegt.

**Patentansprüche**

1. Verfahren zum Behandeln von Natrium-Nitrat (NaNO₃) haltigen Elektrolyten beim elektrochemischen Abtragen der Oberflächen eisenhaltiger Werkstücke, dadurch gekennzeichnet, daß beim Abtragprozeß sich bildendes Nitrit durch Zusetzen eines Oxidationsmittels ständig zu Nitrat oxidiert wird.

2. Verfahren nach Anspruch 1, dadurch gekennzeichnet, daß als Oxidationsmittel Ozon (O₃) verwendet wird.

3. Verfahren nach den Ansprüchen 1 und 2, dadurch gekennzeichnet, daß das Oxidationsmittel dem Elektrolytenkreislauf während des Abtragens im Hauptstrom oder im Bypass zugeführt wird.

4. Verfahren nach den Ansprüchen 1 und 3, dadurch gekennzeichnet, daß der mittlere Nitritgehalt des Elektrolyten so weit abgesenkt wird, daß der Nitritgehalt des abgetragenen, aus dem Elektrolyten abgeschiedenen, Eisenhydroxid-Dickschlammes unter 20 mg/l liegt.

5. Vorrichtung zur Durchführung des Verfahrens

nach den vorhergehenden Ansprüche, mit einer elektrochemischen Bearbeitungsstation (2), einem Vorratsbehälter (4), einer Schlammabscheideeinrichtung (18) und zumindest einer den Elektrolyten in einem Kreislauf fördernden Pumpe, dadurch gekennzeichnet, daß in dem Kreislauf eine das Oxidationsmittel einbringende Behandlunsstation (28) mit einem Ozonerzeuger (34) und einem Reaktor (36) für die Reaktion des Elektrolyten mit dem Ozon eingeschaltet ist.

6. Vorrichtung nach Anspruch 5, dadurch gekennzeichnet, daß die Behandlungsstation (28) stromab der Schlammabscheideeinrichtung (18) in den Elektrolytkreislauf eingeschaltet ist.

7. Vorrichtung nach den Ansprüchen 5 und 6, dadurch gekennzeichnet, daß zwischen dem Ozonerzeuger (34) und dem Reaktor (36) eine Leitung (40, 46) mit einer Pumpe (42) vorgesehen ist und daß eine zweite Leitung (44) vom Reaktor (36) zur Saugseite der Pumpe (42) führt.

8. Vorrichtung nach den Ansprüchen 5 bis 7, dadurch gekennzeichnet, daß die Leitung (46) im Reaktor (36) in einem brauseartigen Einlaß (48) endet, welcher mit einem beiderseits offenen Mischrohr (50) im Reaktor (36) eine Mammutpumpe (50) bildet.

## Claims

1. Process for the treatments of electrolytes which contain sodium nitrate ($NaNO_3$) in the electrochemical removal of the surfaces of iron-containing workpieces, characterised in that nitrite forming in the removal process is continuously oxidised to form nitrate by addition of an oxidising agent.

2. Process according to claim 1, characterised in that ozone ($O_3$) is used as the oxidising agent.

3. Process according to claims 1 and 2, characterised in that the oxidising agent is fed into the electrolyte cycle during the removal in the main stream or in a bypass.

4. Process according to claims 1 and 3, characterised in that the mean nitrite content of the electrolyte is reduced to such an extent that the nitrite content of the removed iron hydroxide thick sludge separated from the electrolyte is below 20 mg/l.

5. Apparatus for carrying out the process according to the preceding claims, with an electrochemical processing station (2), a supply container (4), a sludge separation device (18) and at least one pump conveying the electrolyte through a cycle, characterised in that a treatment station (28) introducing the oxidising agent and having an ozone producer (34) and a reactor (36) for the reaction of the electrolyte with the ozone is included in the cycle.

6. Apparatus according to claim 5, characterised in that the treatment station (28) is situated in the electrolyte cycle downstream of the sludge separation device (18).

7. Apparatus according to claims 5 and 6, characterised in that between the ozone producer (34) and the reactor (36) there is provided a conduit (40, 46) with a pump (42), and that a second conduit (44) leads from the reactor (36) to the suction side of the pump (42).

8. Apparatus according to claims 5 to 7, characterised in that the conduit (46) ends in the reactor (36) in an inlet (48) in the manner of a spray head, which with a mixer tube (50) open at both sides in the reactor (36) forms a mammoth pump (50).

## Revendication

1. Procédé pour le traitement d'électrolytes contenant du nitrate de sodium ($NaNO_3$), utilisés dans l'usinage par procédé électrolytique des surfaces de pièces ferreuses, caractérisé en ce que le nitrite qui se forme au cours de l'opération d'usinage est oxydé en permanence en nitrate par addition d'un oxydant.

2. Procédé selon 12 revendication 1, caractérisé en ce que l'ozone ($O_3$) est utilisé comme oxydant.

3. Procédé selon la revendication 1 ou 2, caractérisé en ce oue l'oxydant est introduit dans le circuit de l'électrolyte, pendant l'usinage, dans le courant principal ou dans la courant de dérivation.

4. Procédé selon l'une quelconque des revendications 1 à 3, caractérisé en ce que la teneur moyenne de l'électrolyte en nitrite est abaissée suffisamment pour que la teneur en nitrite de la boue épaisse d'hydroxyde de fer enlevée de la pièce à usiner et séparée de l'électrolyte se situe au-dessous de 20 mg/1.

5. Dispositif pour l'exécution du procédé selon l'une quelconque des revendications 1 à 4, comprenant un poste d'usinage électrochimique (2), un réservoir (4) et un dispositif de séparation de la boue (18) ainsi qu'au moins une pompe qui fait circuler l'électrolyte, caractérisé en ce qu'il est inclus, dans le circuit de l'électrolyte, un poste de traitement (28) qui comprend un générateur d'ozone (34) et un réacteur (36), pour la réaction de l'électrolyte avec l'ozone, et qui introduit l'oxydant.

6. Dispositif selon la revendication 5, caractérisé en ce que le poste de traitement (28) est inclus dans le circuit de l'électrolyte en aval du dispositif de séparation de la boue (18).

7. Dispositif selon la revendication 5 ou 6, caractérisé en ce qu'il est prévu, entre le générateur d'ozone (34) et le réacteur (36), une conduite (40, 46) équipée d'une pompe (42) et en ce qu'une seconde conduite (44) s'étend du reacteur (36) au côté aspiration de la pompe (42).

8. Dispositif selon l'une quelconque das revendications 5 à 7, caractérisé en ce que la conduite (46) se termine dans le réacteur (36) sous la forme d'une admission en pomme d'arrosoir (48) qui forme, avec un tube mélangeur (50) ouvert des deux côtes dans le réacteur (36), une pompe mammouth (50).

Fig.1

0115793

Fig.2